# EUROPÄISCHE PATENTSCHRIFT

(11) **EP 1 493 630 B1**
(45) Veröffentlichungstag und Bekanntmachung des Hinweises auf die Patenterteilung: **16.11.2011**
(21) Anmeldenummer: 04011120.5
(22) Anmeldetag: 11.05.2004
(51) Int. Cl.: B60R 16/02, H02J 1/00, H02H 7/28

(54) **Fehlerkennung für einen elektrischen Versorgungsring**
Failure recognition for an electrical Powerring
Détection de défaut pour une alimentation électrique en boucle

(30) Priorität: 02.07.2003 DE 10329914
(43) Veröffentlichungstag der Anmeldung: 05.01.2005
(73) Patentinhaber: Rheinmetall Landsysteme GmbH, 24107 Kiel (DE)
(72) Erfinder: Rehder, Ralf, 25858 Högel (DE); Sauer, Bodo, 71665 Vaihingen/Enz (DE)
(74) Vertreter: Dietrich, Barbara

(56) Entgegenhaltungen:
- EP-A- 1 044 851
- US-A- 6 127 741

## Beschreibung

Die Erfindung betrifft eine Vorrichtung zur Verbesserung für einen Powerring nach den Merkmalen des Oberbegriffs des Patentanspruchs 1.

Es ist bekannt, dass die Versorgung von Geräten mit elektrischer Energie maßgeblich von Einzelkomponenten als Verbraucher von elektrischer Leistung in einem Fahrzeug, insbesondere einem militärischen Fahrzeug, über einen sogenannten Powerring erfolgt, bei dem im Gegensatz zu einem sternförmigen Anschluss eines jeden Verbrauchers an einen Generator eine Ringleitung, welche die Leistungsenergie transportiert, jeden elektrischen Verbraucher mit dem Generator verbindet.

Ein Kurzschluss auf der Ringleitung des Powerrings hat zur Folge, dass alle an dem Powerring angeschlossenen Verbraucher nicht mehr versorgt werden. Üblicherweise wird dann eine Reparaturwerkstatt aufgesucht und der Fehler behoben.

In speziellen Anwendungsfällen bei militärischen Fahrzeugen kann es jedoch unerwünscht sein, dass die interne Stromversorgung durch einen einfachen Kurzschluss für alle angeschlossenen Geräte ausfällt.

Bekannte Ausführungen sehen zum Beispiel vor, den Powerring mittels Powerring-Controller in einzelne Segmente zu unterteilen. Die versorgten Geräte sind über Abgriffe am Powerring an den Segmenten des Powerrings angeschlossen. Bei einem Kurzschluss an einem Segment werden dann nur die Geräte, die an diesem Segment angeschlossen sind, von dem Kurzschluss beeinträchtigt und fallen aus. Die an den anderen Segmenten des Powerrings angeschlossenen Geräte werden weiterhin versorgt und bleiben weiterhin funktionsfähig.

In der DE 199 16 452 C2 wird eine Vorrichtung für einen Powerring als Ringleitung in einem militärischen Fahrzeug für die elektrische Versorgung von Geräten, bestehend aus mehreren Controllern als Überwachungs- und Schalteinrichtungen, die entlang und an der Ringleitung angeschlossen sind, und mit weiteren Einrichtungen zur Überwachung und Steuerung der Ringleitung beschrieben, wobei sichergestellt wird mittels einer Anzahl gesteuerter Schalter, dass das Ringleitungssegment links oder rechts vom Abgriffcontroller zu- oder abgeschattet werden kann.

Aus der DE 198 11 626 A1 ist eine Stromschleife bekannt, die so aufgebaut ist, dass Stromverteilungseinheiten in Reihe liegend die Einzelversorgung der an den Stromverteilungseinheiten angeschlossenen Verbraucher übernehmen. Die nebeneinander liegenden Stromverteilungseinheiten sind weitere Leitungen inklusive Stromleitungen selbst miteinander verknüpft. Bei Auftreten eines Kurzschlusses auf einer Leitung, wird dieser geortet und die Stromzuführung neu bestimmt. Das Stromsegment wird abgeschaltet und dann eine neue Stromversorgung zu den betroffenen Einheiten bestimmt. Dabei werden dann Stromverteilungseinheiten einmal in Uhrzeigerrichtung und einmal entgegen der Uhrzelgerrichtung mit Strom versorgt. Bei einem weiteren Kurzschluss, z.B. an der ersten Stromverteilungseinheit der in Uhrzeigerrichtung versorgten Einheiten, können die dahinter liegenden Stromversorgungseinheiten nicht mehr mit Strom versorgt werden. Nachteilig ist der umfangreiche Schaltungeaufbau in den Stromverteilungseinheiten. Hiermit kann lediglich ein Überstrom richtungsabhängig in einem Zweig erfasst werden, unabhängig davon, ob der Überstrom von einem Verbraucher herrührt oder von einem Leitungssegment zwischen zwei Stromversorgungseinheiten.

Nach einem Fehlerfall, zum Beispiel Kurzschluss der Ringleitung, wird der Powerring zunächst komplett abgeschaltet. Mittels sukzessivem Wiedereinschalten wird das fehlerhafte Leitungssegment Identifiziert und vom Powerring abgekoppelt. Dabei kann es nachteilig sein, dass der Powerring Im Fehlerfall (Kurzschluss) zunächst komplett spannungslos geschaltet werden muss, wodurch die Energieversorgung der angeschlosaenen Geräte unterbrochen wird. Außerdem kann der Fehlerort bei sporadischen Fehlern erst nach einer gewissen Zeitspanne lokalisiert werden.

Aus der EP 1 044 851 A ist der Oberbegriff des Anspruchs 1 bekannt.

Aufgabe der Erfindung ist es, eine Verbesserung der Fehlererkennung in den Ringleitungselementen eines Powerrings zu realisieren.

Die Lösung dieser Aufgabe erfolgt erfindungsgemäß dadurch, dass an jedem Ringleitungselement der zu- und abfließende Strom gemessen wird. Mittels Differenzbildung der Stromwerte kann ein Fehlerfall auf dem Ringleitungselement erkannt werden, wenn der Differenzstromwert ungleich Null ist und ein Kurzschlussfall vorliegt.

Die Vorteile der Erfindung liegen vor allem darin, dass die bisherigen Nachteile, zum Beispiel lange Zeitdauer, beim sukzessiven Wiedereinschaiten des Powerrings nach einem Fehlerfall vermieden werden können. Außerdem wird auch die vom angeschlossenen Verbraucher entnommene elektrische Leistung gemessen.

Ein Ausführungsbeisplel der Erfindung ist in der Zeichnung schematisch dargestellt und wird im Folgenden näher beschrieben. Es zeigen:
- Figur 1:: Abgriffcontroller mit Strommessung
- Figur 2:: Powerring mit Abgriffcontroller
- Figur 3:: dito im Fehlerfall
- Figur 4:: Abgriffcontroller mit Fehlerfall

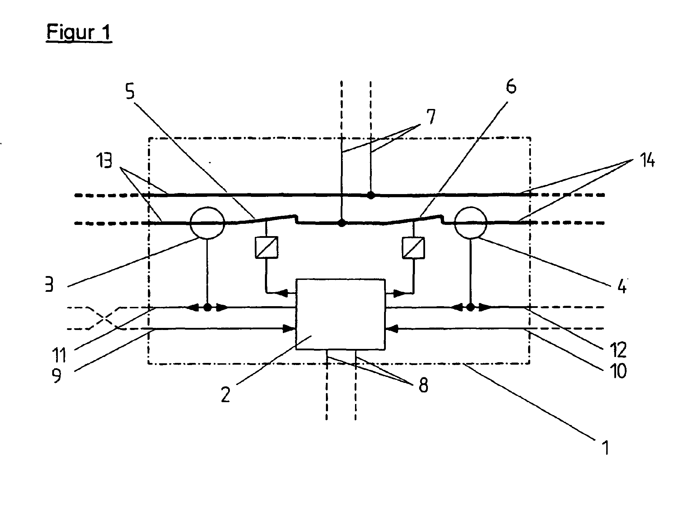

Figur 1 zeigt ein Abgriffcontrollergehäuse 1 mit den Einbauten: einer Steuerungseinheit 2, Stromsensoren 3 und 4, Schaltelementen 5 und 6, welche mittels diversen elektrischen Leitungen 9 bis 14 verknüpft sind. Der Abgriff bzw. die Einspeisung 7 eines Verbrauchers ist an die Leitungen 13, 14 angeschlossen. Signalleitungen 8 zur Fehlermeldung sind an der Steuerungseinheit 2 angeschlossen. Stromsensorsignalleitungen 9 und 10 verbinden die Steuerungseinheit 2 mit benachbarten Abgriffcontrollern bzw. dazugehörenden Steuerungseinheiten links und rechts (nicht dargestellt). Stromsensorsignalleitungen 11 und 12 verbinden die Stromsensoren 3, 4 mit benachbarten Abgriffcontrollern und mit der linken bzw. rechten Seite der Steuerungseinheit 2.

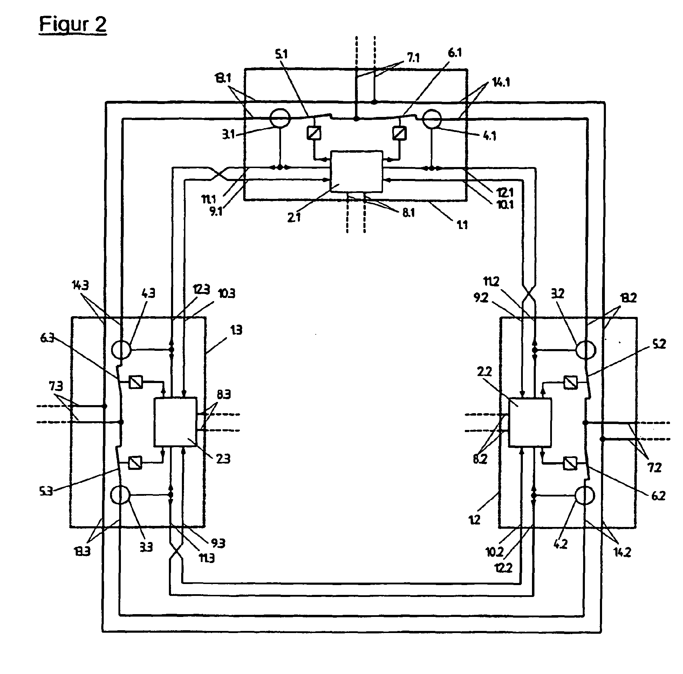

Figur 2 zeigt die Zusammenschaltung von 3 Abgriffcontrollern 1.1, 1.2, 1.3 zu einem Powerring mit den Stromsensorsignalleitungen 9, 10, 11, 12 und den elektrische Leistung transportierenden Ringleitungen 13, 14.

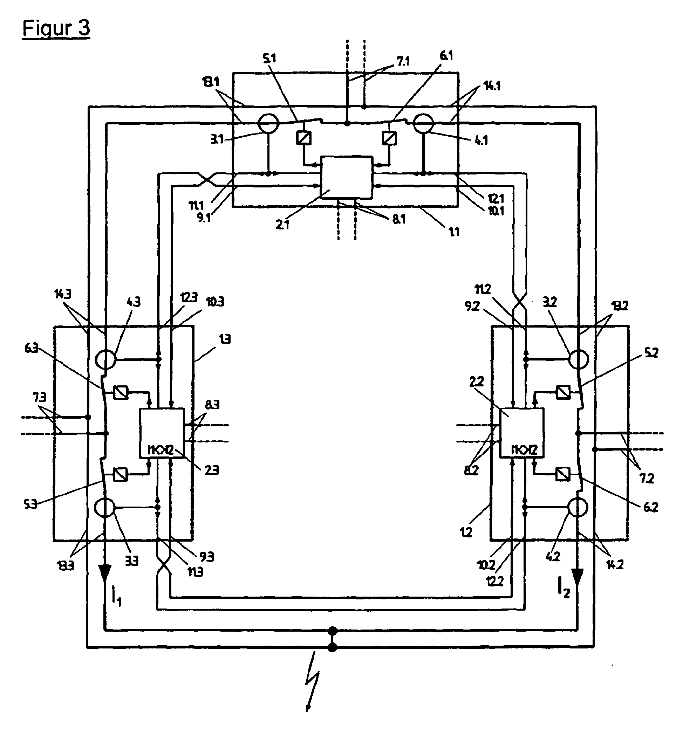

In Figur 3 sind in Ergänzung zu Figur 2 die Ströme I1 und I2 auf der Ringleitung dargestellt sowie ein Kurzschlussfall auf der Leitung zwischen Anschlüssen 13.3 und 14.2.

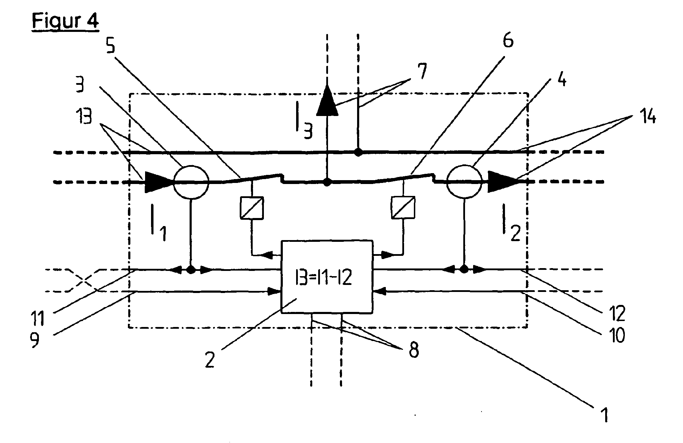

In Figur 4 ist der Abgriffcontroller 1 mit den elektrischen Strömen I1, I2, I3 dargestellt.

Der Abgriffcontroller 1 ist mit Stromsensoren 3, 4 ausgestattet, die es ermöglichen, jeweils den Strom auf beiden Seiten der Ringleitung 13, 14 nach Stromstärke und -richtung zu messen. Jede Seite der Ringleitung 13, 14 kann mittels je einem Schaltelement 5, 6 abgetrennt werden. Die Versorgung für einen an Leitung 7 angeschlossenen Verbraucher (nicht dargestellt) bzw. eine an Leitung 7 angeschlossene Einspeisung für die Ringleitung wird zwischen den Schaltelementen 5 und 6 abgegriffen bzw. vorgenommen. Mittels Zusammenschalten mehrerer Abgriffcontroller entsteht ein Powerring aus zum Beispiel 3 Controllern 1.1, 1.2, 1.3 (Figur 2). Bei einem Fehler, zum Beispiel Kurzschluss auf einer Leitung zwischen Controller 1.2 und 1.3 als Ringleitungselement, wird die fehlerhafte Leitung durch Öffnen der entsprechenden Schalter 5.3 und 6.2 in diesem Beispiel einpolig aus der Ringleitung herausgetrennt. Der Fehlerfall wird gespeichert und an übergeordneter Stelle weiterverarbeitet. Im Normalfall ohne Störung ist die Stromstärke 11, gemessen in Sensor 3.3, gleichgroß mit der Stromstärke 12, gemessen in Sensor 4.2 (Figur 3). Bei einem Kurzschluss als Störung auf der Ringleitung zwischen den Controllern 1.2 und 1.3 unterscheiden sich die Messwerte der Stromsensoren 3.3. und 4.2 in der Stromrichtung und/oder der Stromstärke.
Die Erkennung eines Überstroms am Abgriff eines Abgriffcontrollers als Fehlerfall in einem an die Leitung 7 angeschlossenen Verbraucher (nicht dargestellt) wird ebenfalls mittels Differenzbildung der Stromsensorwerte der Sensoren 3 und 4 ermittelt (Figur 4). In der Steuerungseinheit 2 werden dazu die Stromwerte 11 und 12 der Sensoren 3 und 4 ausgewertet. Einfließende oder abfließende Ströme werden richtungsabhängig voneinander subtrahiert. Das Ergebnis ist die Höhe des ab- oder zufließenden Stroms I3 am Abgriff. Bei Überschreiten eines zulässigen Stromgrenzwerts kann die Stromentnahme mittels der zugeordneten Schalter 5,6 unterbrochen werden.

### Bezugszeichenliste

- 1.: Abgriff-Controllergehäuse
- 2.: Steuerungseinheit
- 3.: Stromsensor Seite a
- 4.: Stromsensor Seite b
- 5.: Schaltelement Seite a
- 6.: Schaltelement Seite b
- 7.: Abgriff für Verbraucher bzw. Einspeisung (Plus u. Minus)
- 8.: Signalleitungen zur Fehlersignalisierung und -quittierung
- 9.: Stromsensorsignalleitung vom benachbartem Abgriff-Controller a
- 10.: Stromsensorsignalleitung vom benachbartem Abgriff-Controller b
- 11.: Stromsensorsignalleitung vom Stromsensor Seite a
- 12.: Stromsensorsignalleitung vom Stromsensor Seite b
- 13.: Ringleitungsabgang Seite a (Plus u. Minus)
- 14.: Ringleitungsabgang Seite b (Plus u. Minus)

## Patentansprüche

1. Vorrichtung für einen Powerring als Ringleitung in einem militärischen Fahrzeug für die elektrische Versorgung von Verbrauchem bestehend aus mehreren Abgriff-Controllem (1) als Überwachungs- und Schalteinrichtungen, die entlang und an der Ringleitung angeschlossen sind, mit mehreren Abgriffen an der Ringleitung für den Anschluss der Verbraucher und für die Einspeisung der elektrischen Energie sowie mit Datenverbindungen zwischen den Abgriff-Controllem (1) und einem übergeordneten Steuergerät zur Überwachung und Steuerung der Ringleitung, und mit einem Abgriff für die elektrische Einspeisung oder für einen Verbraucher baullch mit einem Steuerknoten (2) zu einem Abgriff-Controller (1) zusammengefasst und mit mehreren dieser Abgriff-Controller (1) in einer Ringleitung angeordnet bzw. mehrfach in die Ringleitung zwischengeschaltet, sodass Ringleitungselemente zwischen den Knoten bestehen, und ein oder mehrere Verbraucher oder eine Stromeinspeisung an einem Knoten mit der Ringleitung verbindbar sind und der Knoten eine Anzahl gesteuerter Schalter besitzt, mit denen das Rlngleitungssegment links und/oder rechte vom Knoten getrennt oder zugeschaltet und mit denen der Verbraucher oder die Einspelsung vom Knoten getrennt oder zugeschaltet werden kann **dadurch gekennzeichnet, dass** jeweils Stromsensoren (3, 4) an der Stromleitung (13, 14) links und rechts von Schaltelementen (5, 6) angeordnet sind zur Strom- und Leistungsmessung an der Stromleitung (13, *14) wobei*
• an *jedem Ringleitungselement der zu- und abfließende Strom gemessen wird und mittels Differenzbildung der Stromwerte ein Fehlerfall auf dem Ringleitungselement erkannt wird, wenn der Differenzstrom ungleich Null ist und ein Kurzschlussfall vorriegt, und*
• *die vom angeschlossenen Verbraucher entnommene elektrische leistung gemessen wird und die Erkennung eines überstroms am Abgriff eines Abgriff-Controllers* (1) *mittels Differenzbildung der Stromsensorwerte der Sensoren (3, 4) als Feh*/*arfell ermittelt wird.*

2. Vorrichtung nach Anspruch 1 **dadurch gekennzeichnet, dass** der Abgriffcontroller (1) bzw. Knoten als intelligente Steuereinheit als Anschluss sowohl eines Stromverbrauchers als auch einer Stromeinspeisung benutzt werden kann.

3. Vorrichtung nach Anspruch 1 und 2 **dadurch gekennzeichnet, dass** der Knoten weitere Einrichtungen zur Spannungsmessung und für Leitungsschutz mit Statusmeldung besitzt.

4. *Vorrichtung* nach einem der oben genannten Ansprüche, **dadurch gekennzeichnet, dass** der Knoten (1) Schaltelemente (5, 6) besitzt, welche links und rechts vom Anschluss (7) für Verbraucher oder Einspeisung angeordnet sind.

5. *Vorrichtung* nach einem der oben genannten Ansprüche 1 bis 4, **dadurch gekennzeichnet, dass** der Knoten eine Datenverbindung (9, 10, 11, 12) zum Datenaustausch mit den Stromsensoren und mit weiteren Knoten einer Ringleitung mittels Steuerungseinheit (2) besitzt.

6. *Vorrichtung* nach einem der oben genannten Ansprüche 1 bis 5, **dadurch gekennzeichnet, dass** der Knoten eine Datenverbindung (8) zum Datenaustausch mit einem übergeordneten Steuergerät besitzt

7. *Vorrichtung* nach einem der oben genannten Ansprüche 1 bis 6, **dadurch gekennzeichnet, dass** Stromsensoren (3, 4) zur Messung des Ringleitungsstroms in den Leitungen (13, 14) und des Verbraucher- und/oder Einspeisestroms (7) angeordnet sind.

## Claims

1. Apparatus for a power ring as a ring line in a military aircraft for the electrical supply of loads consisting of a plurality of tap controllers (1) as monitoring and switching devices, which are connected along and to the ring line, having a plurality of taps on the ring line for the connection of the loads and for feeding the electrical power, and having data links between the tap controllers (1) and a superordinate controller for monitoring and controlling the ring line, and having a tap for electrical feed and for a load physically combined with a control node (2) to form a tap controller (1), and having a plurality of said tap controllers (1) arranged in a ring line and a plurality connected in between in the ring line, such that ring line elements exist between the nodes, and one or more loads or a current feed can be connected to the ring line at a node, and the node has a number of controlled switches, by means of which the ring line segment to the left and/or to the right of the node can be connected or disconnected, and by means of which the load or the feed can be disconnected from or connected to the node, **characterized in that** current sensors (3, 4) are in each case arranged to the left and to the right of the switching elements (5, 6) on the current line (13, 14), for current measurement and power measurement on the current line (13, 14), *wherein*
• *the current flowing in and out is measured at each ring line element and a fault situation on the ring line element is identified by subtraction of the current values, if* the *difference current is not equal to zero and a short is present, and*
• *the electrical power (7) which is taken from the connected load is measured, and the identification of an overcurrent at a tap of a tap controller (1) is determined as a fault situation by subtraction of the current sensor values from the sensors (3, 4).*

2. Apparatus according to Claim 1, **characterized in that** the tap controller (1) or node can be used as an intelligent control unit as a connection both of a current load and of a current feed.

3. Apparatus according to Claims 1 and 2, **characterized in that** the node has further devices for voltage measurement and for line protection with status signalling.

4. *Apparatus* according to one of the abovementioned claims, **characterized in that** the node (1) has switching elements (5, 6), which are arranged to the left and to the right of the connection (7) for a load or feed.

5. *Apparatus* according to one of the abovementioned Claims 1 to 4, **characterized in that** the node has a data link (9, 10, 11, 12) for interchanging data with the current sensors and with further nodes on a ring line by means of a control unit (2).

6. *Apparatus* according to one of the abovementioned Claims 1 to 5, **characterized in that** the node has a data link (8) for interchanging data with a superordinate controller.

7. *Apparatus* according to one of the abovementioned Claims 1 to 6, **characterized in that** current sensors (3, 4) for measurement of the ring line current are arranged in the lines (13, 14), and for measurement of the load and/or feed current (7).

## Revendications

1. Dispositif pour une boucle d'énergie sous forme de ligne en boucle dans un véhicule militaire pour l'alimentation électrique d'appareillages composé de plusieurs contrôleurs de prise (1) sous la forme de dispositifs de surveillance et de commutation, lesquels sont raccordés le long de la ligne en boucle et à celle-ci, comprenant plusieurs prises sur la ligne en boucle pour le raccordement des appareillages et pour l'alimentation en énergie électrique et comprenant des liaisons de données entre les contrôleurs de prise (1) et un contrôleur superviseur pour surveiller et commander la ligne en boucle, et comprenant une prise pour l'alimentation en énergie électrique ou pour un appareillage regroupé par construction avec un noeud de commande (2) pour former un contrôleur de prise (1) et comprenant plusieurs de ces contrôleurs de prise (1) disposés dans une ligne en boucle ou interconnectés plusieurs fois dans la ligne en boucle, de manière à obtenir des éléments de ligne en boucle entre les noeuds, et un ou plusieurs appareillages ou un dispositif d'alimentation en courant peuvent être raccordés au niveau d'un noeud avec la ligne en boucle et le noeud possède un certain nombre de commutateurs commandés avec lesquels le segment de ligne en boucle à gauche et/ou à droite peut être déconnecté du noeud ou y être connecté et avec lesquels l'appareillage ou le dispositif d'alimentation peut être déconnecté du noeud ou y être connecté, **caractérisé en ce que** des capteurs de courant (3, 4) sont respectivement disposés sur la ligne électrique (13, 14) à gauche et à droite d'éléments de commutation (5, 6) pour la mesure du courant et de la puissance au niveau de la ligne électrique (13, 14),
* le courant arrivant et partant étant mesuré sur chaque élément de la ligne en boucle et une situation de défaut sur l'élément de ligne en boucle est détectée en calculant la différence des valeurs du courant lorsque le courant différentiel est différent de zéro et qu'il existe une situation de court-circuit et
* la puissance électrique (7) prélevée par les appareillages raccordés est mesurée et la détection d'une surintensité au niveau de la prise d'un contrôleur de prise (1) est déterminée comme une situation de défaut en calculant la différence des valeurs de détection de courant des capteurs (3, 4).

2. Dispositif selon la revendication 1, **caractérisé en ce que** le contrôleur de prise (1) ou le noeud en tant qu'unité de commande intelligente peut être utilisé comme raccordement aussi bien d'une charge électrique que d'un dispositif d'alimentation en courant.

3. Dispositif selon les revendications 1 et 2, **caractérisé en ce que** le noeud possède des dispositifs supplémentaires pour mesurer la tension et pour la protection de ligne avec signalisation d'état.

4. Dispositif selon l'une des revendications précédentes, **caractérisé en ce que** le noeud (1) possède des éléments de commutation (5, 6) qui sont disposés à gauche et à droite du raccord (7) pour l'appareillage ou l'alimentation.

5. Dispositif selon l'une des revendications 1 à 4, **caractérisé en ce que** le noeud possède une liaison de données (9, 10, 11, 12) pour l'échange de données avec les capteurs de courant et avec d'autres noeuds d'une ligne en boucle au moyen d'une unité de commande (2).

6. Dispositif selon l'une des revendications 1 à 5, **caractérisé en ce que** le noeud possède une liaison de données (8) pour l'échange de données avec un contrôleur superviseur.

7. Dispositif selon l'une des revendications 1 à 6, **caractérisé en ce que** les capteurs de courant (3, 4) sont disposés pour mesurer le courant de ligne en boucle dans les lignes (13, 14) et du courant d'appareillage et/ou d'alimentation (7).
